Europäisches Patentamt

European Patent Office

Office européen des brevets

(19)

(11) Veröffentlichungsnummer: **0 070 498**
**B1**

# (12) EUROPÄISCHE PATENTSCHRIFT

(45) Veröffentlichungstag der Patentschrift:
**29.01.86**

(21) Anmeldenummer: **82106241.1**

(22) Anmeldetag: **13.07.82**

(51) Int. Cl.⁴: **C 08 F 2/22,** C 08 F 220/10,
C 09 D 3/80

(54) Wässrige Kunststoff-Dispersion, Verfahren zu ihrer Herstellung und Verwendung dieser Dispersion.

(30) Priorität: **16.07.81 DE 3128143**

(43) Veröffentlichungstag der Anmeldung:
**26.01.83 Patentblatt 83/4**

(45) Bekanntmachung des Hinweises auf die Patenterteilung:
**29.01.86 Patentblatt 86/5**

(84) Benannte Vertragsstaaten:
**AT BE CH DE FR GB IT LI LU NL SE**

(56) Entgegenhaltungen:
**DE - B - 1 194 580**
**FR - A - 2 342 992**

(73) Patentinhaber: **HOECHST AKTIENGESELLSCHAFT,
Postfach 80 03 20, D-6230 Frankfurt am Main 80 (DE)**

(72) Erfinder: **Mondt, Josef, Dr., Altkönigstrasse 24d,
D-6240 Königstein/Taunus (DE)**

## Beschreibung

Die Erfindung bezieht sich auf eine wässrige Copolymerisat-Dispersion, ein Verfahren zu ihrer Herstellung und die Verwendung dieser Dispersion für die Herstellung von durch Wärme vernetzbaren (wärmehärtbaren) Überzügen.

Für die Herstellung von wärmehärtbaren Überzügen besitzen wässrige Copolymerisat-Dispersionen besonderes Interesse, weil sie nicht brennbar sind und physiologisch weniger bedenklich als Lösemittel enthaltende Überzugsmittel. Ausserdem entfällt die Wiedergewinnung von teurem Lösemittel. Neben den Eigenschaften, die man von allen Kunststoff-Dispersionen fordert, wie gutes Fliessverhalten, gute Verarbeitbarkeit, Koagulatfreiheit, Lager- und Temperaturbeständigkeit, ist bei Copolymerisat-Dispersionen, die als Bindemittel zur Herstellung von wärmehärtbaren Überzügen verwendet werden sollen, noch besonders wichtig, dass man gut verlaufende und gut haftende Überzugsmittel erhält, die schon bei Raumtemperatur trocknen und keine Risse oder sonstige Filmstörungen aufweisen. Die daraus entstandenen Überzüge sollen dann durch Wärmebehandlung härtbar sein. Zu diesem Zweck enthalten die den Dispersionen zugrundeliegenden Copolymerisate reaktive Gruppen im Molekühl, welche mit reaktiven Gruppen bestimmter Harze, insbesondere Aminoplast-Harze, reagieren, so dass das Bindemittel vernetzt.

Neben den Vorteilen, wie beispielsweise niedrige Viskosität bei hohem Feststoffgehalt, hohes Molekulargewicht des Polymerisats und Abwesenheit flüchtiger Lösemittel, besitzen wässrige Copolymerisat-Dispersionen für wärmehärtbare Überzüge auch Nachteile, wie beispielsweise mangelnde Pigmentbenetzung, mangelnde Haftung auf dem Untergrund und schlechtes Verlaufen der mittels dieser Dispersion hergestellten Überzugsmittel.

Unter Verlaufen versteht der Fachmann die Fähigkeit der flüssigen Überzugsmittel, Unebenheiten in der Oberfläche auszugleichen. Neben der Viskosität hat auch die Oberflächenspannung eines Überzugsmittels Einfluss auf sein Verlaufen. Eine weitere Voraussetzung für das einwandfreie Verlaufen von Lackfilmen nach der Applikation des Lackes auf dem entsprechenden Untergrund ist beispielsweise ein gutes Koaleszieren der Latexpartikel bei Raumtemperatur.

Es ist bekannt, wärmehärtbaren Überzugsmitteln, die als Bindemittel wässrige Dispersionen auf Basis von Acrylpolymeren enthalten, zur Verbesserung des Verlaufens Verlaufshilfsmittel («Zusammenfliessmittel», Koaleszenzmittel) zuzusetzen (vgl. deutsche Offenlegungsschrift 22 11 169 (= US-Patentschriften 3 962 167 und 4 020 219), deutsche Offenlegungsschrift 22 52 065 (= US-Patentschrift 4 132 688), deutsche Offenlegungsschrift 24 16 446 (= US-Patentschrift 3 904 795), deutsche Offenlegungsschrift 25 05 829 (= US-Patentschrift 4 137 205), deutsche Offenlegungsschrift 27 09 308 (= britische Patentschrift 1 574 721).

Diese Mittel unterstützen das Zusammenfliessen des Überzugs während des Trocknens an der Luft vor dem Einbrennen. Zur Anwendung kommen langkettige Alkohole, Dimethylformamid, Tributylphosphat, Polyethylen- oder Polypropylenglykole, 2-Butoxyethanolacetat, Diacetonalkohol, 3,5,5-Trimethylcyclohexen-2-on-1, Caprolactam, Additionsprodukte von mehrwertigen Alkoholen mit $C_2$- bis $C_4$- Epoxiden oder gelöste und verträgliche Copolymerisatharze.

Der Nachteil der genannten Zusätze liegt darin, dass ausser Glanz und Verlauf andere anwendungstechnische Eigenschaften der Filme durch die hydrophilen und niedrigmolekularen Zusätze negativ beeinflusst werden. In der Regel leiden die Wasserfestigkeit und die Chemikalienresistenz der eingebrannten Überzüge.

Bekannt ist ferner der Zusatz von fluorhaltigen oberflächenaktiven Stoffen zu Dispersionsfarben, wodurch eine grössere Beständigkeit gegen Fleckigwerden des Anstrichs erreicht werden soll (vgl. US-Patentschrift 3 891 591). Weiterhin ist bekannt, Metallpigmente mit fluorhaltigen oberflächenaktiven Stoffen zu hydrophobieren, um auch mit wässrigen Lacksystemen Metalliclackierungen durchführen zu können (vgl. US-Patentschrift 3 839 254). Diesen Druckschriften ist jedoch nicht zu entnehmen, dass Fluortenside das Verlaufen der Überzugsmittel verbessern könnten.

Es ist ferner bekannt (vgl. DE-AS 1 194 580), dass man bei der Polymerisation von einfach ungesättigten Monomeren in wässrigem Medium unter Verwendung eines wasserlöslichen Katalysators und in Gegenwart einer einen perfluorierten aliphatischen Kohlenwasserstoffrest enthaltenden Säure als Dispergiermittel Dispersionen erhalten kann, die bandartige Polymerisatteilchen enthalten, welche in mindestens einer Dimension kleiner als 0,1 µm sind. Bei Anwendung von solchermassen hergestellten Dispersionen als Überzugsmittel hat sich die geringe Teilchengrösse jedoch als nachteilig erwiesen. Andererseits wurde gefunden (vgl. DE-AS 1 194 580), dass man durch radikalisch initiierte Polymerisation einer monomeren, äthylenisch ungesättigten Verbindung in wässrigem Medium kolloidale Dispersionen mit relativ grossen kugelförmigen Teilchen von mehr als 0,2 µm mittleren Durchmessers erhalten kann, wenn man als gesättigte perfluorierte Carbonsäure eine oder mehrere Polyäthersäuren verwendet. Mit den letzteren Dispersionen können auf einer Oberfläche zwar dickere Überzüge des Polymerisats erhalten werden, ohne dass Eintrocknungsrisse auftreten, es sind aber in der genannten Literatur keinerlei Produkt- bzw. Eigenschaftsmerkmale beschrieben, die eine Verwendung der Dispersionen zur Herstellung von durch Wärme vernetzbaren Überzugsmitteln ermöglichen oder erkennen lassen könnten, wobei die Überzugsmittel u.a. der hierzu erforderlichen thermischen Behandlung unbeschadet standhalten müssten.

Aufgabe der Erfindung ist die Schaffung einer wässrigen Dispersion eines Copolymerisats, welches mit einem Aminoplastharz in der Wärme vernetzbar ist und zu besonders gut verlaufenden und fehlerfreien Überzügen auf metallischen Untergründen führt.

Es wurde gefunden, dass die Verlaufeigenschaften eines Überzugsmittels, das auf der Basis einer wässrigen Copolymerisat-Dispersion als Bindemittel hergestellt wurde, verbessert werden können, wenn die zu verwendende Copolymerisat-Dispersion ein Fluortensid als Emulgator enthält. Ein derartiges Überzugsmittel ergibt eine ausgezeichnet verlaufende, hochelastische, wetterbeständige, gut haftende und fehlerfreie Oberflächenbeschichtung auf metallischen Untergründen.

Gegenstand der Erfindung ist somit eine wässrige Kunststoff-Dispersion mit einem Partikeldurchmesser im Bereich von 0,05 bis 0,2 μm auf Basis eines Copolymerisats aus einem Acrylmonomer, einem Vinylmonomer und einem funktionellen Monomer, enthaltend mindestens einen Emulgator, dadurch gekennzeichnet, dass sie als Emulgator ein Fluortensid allein oder zusammen mit einem anionischen oder nichtionischen, fluorfreien Emulgator enthält.

Gegenstand der Erfindung ist weiterhin ein Verfahren zur Herstellung einer wässrigen Copolymerisat-Dispersion durch Copolymerisieren von

A) 20 bis 80 Gew.-% eines Methacrylsäureesters, dessen Homopolymerisat eine Glasübergangstemperatur $T_G$ oberhalb + 50 °C hat, oder Styrol, Vinyltoluol oder Vinylxylol, oder ein Gemisch dieser Monomeren, wobei das aromatische Monomer nicht mehr als 50 Gew.-% der Gesamtmenge aller Monomere ausmacht, als «hartmachende» Komponente,

B) 20 bis 80 Gew.-% eines Acrylsäure- oder Methacrylsäureesters, dessen Homopolymerisat eine Glasübergangstemperatur $T_G$ unterhalb + 50 °C hat, oder eines Gemisches dieser Monomeren, als «weichmachende» Komponente und

C) jeweils bezogen auf die Summe aus A + B = 100,

1) 3 bis 18 Gew.-% eines monoolefinisch ungesättigten Monomeren mit einer Hydroxylgruppe und

2) 0,5 bis 10 Gew.-% einer α,β-ungesättigten Monocarbonsäure und/oder einer ungesättigten Dicarbonsäure in wässrigem Medium in Gegenwart eines radikalbildenden Initiators und eines Emulgators oder eines Gemisches mehrerer Emulgatoren, dadurch gekennzeichnet, dass die Copolymerisation in Gegenwart eines Fluortensids als Emulgator oder als Bestandteil des Emulgatorgemisches durchgeführt wird.

Gegenstand der Erfindung ist schliesslich die Verwendung der auf diese Weise hergestellten Copolymerisat-Dispersion für die Herstellung von durch Wärme vernetzbaren Überzügen.

Das in der erfingungsgemässen Dispersion dispergierte Copolymerisat enthält als hartmachende Komponente A Einheiten auf Basis eines Methacrylsäureesters, dessen Homopolymerisat eine Glasübergangstemperatur $T_G$ oberhalb + 50 °C besitzt, Styrol, Vinyltoluol oder Vinylxylol oder eines Gemischs dieser Monomeren, wobei das aromatische Monomer nicht mehr als 50 Gew.-% der Gesamtmenge aller Monomeren ausmacht. Beispiele für hartmachende Methacrylsäureester, die vorzugsweise 5 bis 8 Kohlenstoffatome aufweisen, sind insbesondere Methylmethacrylat sowie Ethylmethacrylat, Isopropylmethacrylat, sek-Butylmethacrylat und t-Butylmethacrylat. Die Komponente A wird in einer Menge von 20 bis 80, vorzugsweise 25 bis 70 Gew.-% eingesetzt.

Als weichmachende Komponente B enthält das Copolymerisat Einheiten auf Basis eines Acrylsäureesters oder Methacrylsäureesters, dessen Homopolymerisat eine Glastemperatur $T_G$ unterhalb + 50 °C aufweist, oder eines Gemisches dieser Ester, wobei die Alkoholkomponente des Esters vorzugsweise 2 bis 18 Kohlenstoffatome aufweist. Beispiele für diese Monomeren sind Ethylacrylat, Propylacrylat, Isopropylacrylat, die Acryl- und Methacrylsäureester von n- und i-Butylalkohol, 2-Ethylhexylalkohol, Decylalkohol, Laurylalkohol und Stearylalkohol. Aus dieser Gruppe von Monomeren werden Ethylacrylat und n-Butylacrylat bevorzugt verwendet. Die Komponente B wird in einer Menge von 20 bis 80, vorzugsweise 30 bis 60 Gew.-% eingesetzt.

Um eine ausreichende Reaktivität der aus der Dispersion herzustellenden Überzugsmischung zu erreichen, enthält das Copolymerisat weiterhin 3 bis 18, vorzugsweise 8 bis 10 Gew.-%, bezogen auf die Summe von A + B = 100, Einheiten auf Basis eines monoolefinisch ungesättigten Monomers mit einer Hydroxylgruppe oder auch mehreren Hydroxylgruppen. Bevorzugte Beispiele für derartige Monomere mit Hydroxylgruppen sind Hydroxyalkylester von α,β-ungesättigten Monocarbonsäuren, wobei der Alkylrest des Esters vorzugsweise 2 bis 6 Kohlenstoffatome und die Monocarbonsäure vorzugsweise 3 oder 4 Kohlenstoffatome aufweisen, z.B. 2-Hydroxyethylacrylat, 2-Hydroxypropylacrylat, 2-Hydroxyethylmethacrylat, 3-Hydroxypropylmethacrylat, 4-Hydroxybutylmethacrylat, Glycerinmonomethacrylat, Trimethylolpropanmonoacrylat, sowie Umsetzungsprodukte aus 2-Hydroxyethylmethacrylat mit 2–8 Mol Ethylenoxid, Neopentylglykolmonomethacrylat und Triethylenglykolmonoacrylat.

Der Einbau von ungesättigten Monocarbonsäuren in das Copolymerisat erhöht die Stabilität der Dispersion bei der Herstellung, Lagerung und Anwendung. Besonders bei Industrielacken treten bei der Herstellung und Applikation der Beschichtungsmittel hohe Scherkräfte auf. Aus diesem Grunde enthält das Copolymerisat 0,5 bis 10, vorzugsweise 1 bis 9 Gew.-%, bezogen auf die Summe von A + B = 100, Einheiten auf Basis einer α,β-ungesättigten Monocarbonsäure mit vorzugsweise 3 oder 4 Kohlenstoffatomen und/oder einer ungesättigten Dicarbonsäure mit vorzugsweise 4 oder 5 Kohlenstoffatomen. Geeignete Säuren sind Acrylsäure, Methacrylsäure, Crotonsäure, Maleinsäure, Fumarsäure und Itaconsäure. Bevorzugt verwendet werden Acrylsäure und/oder Methacrylsäure.

Ausserdem enthält das Copolymerisat gegebenenfalls noch zusätzlich D) 0,05 bis 7, vorzugsweise 0,5 bis 6 Gew.-% Einheiten auf Basis eines Säureamids, eines N-Methylolamids oder eines veretherten N-Methylolamids einer ungesättigten Monocarbonsäure mit vorzugsweise 3 oder 4 Kohlenstoffatomen oder eines Gemisches dieser Monomeren, beispielsweise Acrylamid, Methacrylamid, N-Methylolacrylamid, N-Methylolmethacrylamid, n-Butylether des N-Methylolacrylamids oder N-Methylolmethacrylamids, i-Butylether des N-Methylolacrylamids oder N-Methylolmethacrylamids. Diese Monomeren tragen sowohl zur Stabilisierung der Copolymerisat-Dispersion als auch zur Vernetzung des mittels dieser Dispersion hergestellten Überzugsmittels beim Einbrennen bei. Bevorzugt sind Methacrylamid und N-Methylolacrylamid. Schliesslich enthält das Copolymerisat gegebenenfalls zusätzlich E) 0,5 bis 25, vorzugsweise 1 bis 22 Gew.-% Einheiten auf Basis eines Vinylesters einer gesättigten Monocarbonsäure mit 2 bis 6 Kohlenstoffatomen, beispielsweise Vinylacetat, Vinylpropionat, Vinylbutyrat oder Vinylvalerianat. Vorzugsweise wird Vinylacetat verwendet. Die Menge der Komponenten D) und E) ist auf die Summe von A + B =100 bezogen.

Die Auswahl der Art und Menge der Monomeren der Gruppen Säuren C2), Säureamide D) und Vinylester E) erfolgt nach den Anforderungen, die an den eingebrannten Überzug hinsichtlich Wasser-, Wetter-, Lösemittel- und Chemikalienbeständigkeit gestellt werden. Die Zusammensetzung des Copolymerisats ist im Rahmen der vorgenannten Mengenbereiche derart festzulegen, dass eine Copolymerisat-Dispersion entsteht, deren minimale Filmbildetemperatur (MFT) im Bereich von 0 bis 60 °C, vorzugsweise 10 bis 50 °C liegt.

Die erfindungsgemässe Copolymerisat-Dispersion besitzt einen Feststoffgehalt von 20 bis 60 Gew.-%, vorzugsweise 30 bis 50 Gew.-%. Sie enthält neben dem Copolymerisat ein Fluortensid als alleinigen Emulgator oder im Gemisch mit einem üblichen Emulgator.

Dieser übliche Emulgator ist vorzugsweise ein anionischer Emulgator. Beispiele für anionische Emulgatoren sind die Alkalisalze von Schwefelsäurehalbestern von Alkylphenolen oder Alkoholen, ferner die Schwefelsäurehalbester von oxethylierten Alkylphenolen oder Alkoholen oder auch Alkyl- oder Arylsulfonat, vorzugsweise die Alkalisalze des Schwefelsäurehalbesters eines mit 4–5 Mol Ethylenoxid umgesetzten Nonylphenols, ferner Natriumlaurylsulfat, Natriumlaurylethoxylatsulfat und sekundäre Natriumalkansulfonate, deren Kohlenstoffkette 8–20 Kohlenstoffatome enthält. Die Menge des anionischen Emulgators beträgt 0,1–5,0, vorzugweise 0,5–3 Gew.-%, bezogen auf die Monomeren. Ferner kann zur Erhöhung der Stabilität der wässrigen Copolymerisat-Dispersion zusätzlich ein nichtionischer Emulgator vom Typ eines ethoxylierten Alkylphenols oder Fettalkohols, z.B. Nonylphenol mit 4–30 Mol Ethylenoxid, im Gemisch mit dem anionischen Emulgator eingesetzt werden, und zwar ebenfalls in einer Menge von 0,1–5,0, vorzugsweise 0,5–3,0 Gew.-%, bezogen auf die Monomeren.

Unter dem Begriff Fluortensid werden oberflächenaktive Verbindungen verstanden, die einen Perfluoralkylrest mit 2 bis 20 Kohlenstoffatomen oder einen Perfluoralkylrest mit 7 bis 30 Kohlenstoffatomen im Molekül enthalten. Beispiele für derartige Verbindungen sind Perfluoralkylsulfonsäuren, Perfluoraralkylsulfonsäuren, langkettige Perfluorcarbonsäuren, Perfluoralkanphosphonsäuren, Perfluoralkanphosphinsäuren, die Salze dieser Säuren, Perfluoralkylsulfate, Perfluoraralkylsulfate und Perfluoralkylphosphate. Bevorzugt ist ein Gemisch aus mindestens einer Perfluoralkanphosphonsäure und mindestens einer Perfluoralkanphosphinsäure, deren Kohlenstoffkette jeweils 6 bis 16 Kohlenstoffatome umfasst.

Es können definierte Produkte eingesetzt werden, z.B. Perfluorhexanphosphonsäure, Perfluoroctanphosphonsäure, Perfluordecanphosphinsäure, Perfluordodecanphosphinsäure, und definierte Gemische aus reinen Fluortensiden mit definierten Kohlenstoffketten, aber auch ein Gemisch von Produkten mit statistisch verteilter Kohlenstoffkettenlänge, beispielsweise $-C_6F_{13}$ bis $-C_{10}F_{21}$, sowohl bei der Phosphonsäure als auch bei der Phosphinsäure. Besonders gute Ergebnisse erzielt man mit diesem Gemisch, wenn das Mischungsverhältnis der Perfluoralkanphosphonsäuren / Perfluoralkanphosphinsäuren im Bereich von 60:40 bis 40:60 und die Menge des Fluortensids in einem Bereich von 0,05 bis 5 Gew.-%, vorzugsweise 0,3 bis 0,8 Gew.-%, bezogen auf den Gesamtfeststoff, liegt.

Das erfindungsgemässe Polymerisationsverfahren wird als Emulsionspolymerisation in einem wässrigen Medium in den bekannten Apparaturen, beispielsweise in einem Rührkessel mit Heiz- und Kühlvorrichtung, durchgeführt. Dabei sind die Monomeren in dem wässrigen Medium emulgiert. Die Zugabe der Monomeren kann in der Weise erfolgen, dass eine Lösung aus dem gesamten Wasser, dem Emulgator und einem Teil des Initiators vorgelegt wird und das Monomerengemisch mit dem Rest des Initiators bei der Polymerisationstemperatur langsam zugegeben wird. Es ist jedoch auch möglich, einen Teil des Wassers und des Emulgators vorzulegen und aus dem Rest des Wassers und des Emulgators und aus den Monomeren eine Voremulsion herzustellen, die in das Polymerisationsmilieu eingeführt wird. Die Polymerisation wird vorzugsweise in der Weise durchgeführt, dass man 30–50 Gew.-% des Wassers mit 10–15 Gew.-% des Emulgators oder Emulgatorgemisches vorgelegt, und aus den Monomeren, dem restlichen Teil des Wassers und den verbleibenden Emulgatoren eine Voremulsion hergestellt, die über 1–3 Stunden der erwärmten Vorlage zudosiert wird.

Das Fluortensid kann nachträglich in die Copolymerisat-Dispersion eingemischt werden, es wird jedoch vorzugsweise bereits bei der Herstellung der Monomeremulsion als Emulgator zugegeben.

Als Initiator eignen sich die üblichen anorganischen Perverbindungen, insbesondere Ammoniumsalze und Alkalisalze der Peroxydischwefelsäure und der Peroxydiphosphorsäure, z.B. Natriumperoxydisulfat, Kaliumperoxydisulfat, Ammoniumperoxydisulfat, Ammoniumperoxydiphosphat, Natriumperoxydiphosphat und Kaliumperoxydiphosphat. Es können auch wasserunlösliche Initiatoren verwendet werden, die in den Monimeren löslich sind, z.B. Benzoylperoxid, Cumolhydroperoxid, Di-Tert.-Butylperoxid, Butylhydroperoxid und Perisopivalat, die auch zum Teil in Kombination mit Reduktionsmitteln wie Natriumdisulfit, Hydrazin, Hydroxylamin und mit katalytischen Mengen an Beschleunigern wie Eisen-, Kobalt-, Cer- und Vanadylsalzen eingesetzt werden können. Vorzugsweise werden wasserlösliche Initiatoren eingesetzt. Auch eine Kombination von wasserlöslichen und organischen Peroxiden kann verwendet werden. In besonderen Fällen empfiehlt es sich, dem Polymerisationsansatz eine Puffersubstanz, z.B. Natriumhydrogencarbonat, zuzusetzen, um den pH-Wert im Bereich von 3–5 zu halten.

Zur Regelung des Molekulargewichts wird eine Verbindung verwendet, die bei der Polymerisation von Acrylatmonomeren als Kettenabbrecher brauchbar ist. Neben perhalogenierten Kohlenwasserstoffen kann jede Verbindung der Formel R–SH, in der R einen Alkylrest, Arylrest oder Aralkylrest, vorzugsweise einen Alkylrest mit 2–18 Kohlenstoffatomen bedeutet, verwendet werden. Beispiele für derartige Verbindungen sind Ethylmercaptan, n-Butylmercaptan, n-Octylmercaptan, Laurylmercaptan und t-Dodecylmercaptan. Der Regler wird in einer Menge von 0,5–5,0 Gew.-%, bezogen auf die Summe der Monomeren, eingesetzt. Wird für bestimmte Einsatzgebiete ein besonders hohes Molekulargewicht verlangt, wird die Emulsionspolymerisation ohne Regler durchgeführt.

Die Polymerisationstemperatur liegt im Bereich von 20 bis 100 °C, vorzugsweise 40 bis 90 °C.

Nach Beendigung des Zulaufs des Monomerengemisches wird der gesamte Ansatz noch für 1–3 Stunden bei 60–90 °C, vorzugsweise bei 70–85 °C, gerührt. Anschliessend wird die Dispersion mit einem tertiären Amin, beispielsweise Triethylamin, Diethanolmonomethylamin, Triethanolamin, Dimethylisopropylhydroxymethylamin, Dimethylaminoethanol, Dimethylaminopropanol oder Diethylaminoethanol, auf einen pH-Wert von 7,5–9,5 eingestellt. Besonders durch die Verwendung von Diethanolmonomethylamin, Dimethylaminoethanol und Dimethylaminopropanol erhält man eine besonders gute Pigmentbenetzung der Dispersion und damit gute lacktechnische Eigenschaften.

Die durch das erfindungsgemässe Verfahren erhaltenen Copolymerisate haben Glasübergangstemperaturen ($T_G$) im Bereich von 0 bis +60 °C, bevorzugt von +10 bis +50 °C. Das erfindungsgemässe Verfahren führt zu Copolymerisaten, die eine mittlere Teilchengrösse (Partikeldurchmesser) von 0,05 bis 0,2 μm aufweisen, bevorzugt von 0,06 bis 0,15 μm.

Die erfindungsgemäss erhaltene wässrige Copolymerisat-Dispersion ergibt im Gemisch mit einem wasserlöslichen und/oder wasserdispergierbaren Aminoplastharz wärmehärtbare Überzüge, die hervorragend verlaufen und besonders elastische, haftfeste, korrosions- und witterungsstabile Grundierungen, Füller und Einschichtlackierungen ergeben.

Unter Aminoplastharzen versteht man hitzehärtbare Reaktionsprodukte aus Aldehyden, vorzugsweise Formaldehid, mit polyfunktionellen Aminen, beispielsweise Harnstoff sowie Triazin wie Melamin oder Benzoguanamin. Diese Harze sind häufig veräthert, beispielsweise mit Methanol, um die Löslichkeit in Wasser zu fördern. Ein häufig verwendetes Melaminharz ist Hexamethoxymethylmelamin, das in Wasser klare Lösungen ergibt und deshalb besonders gut dosiert werden kann und zu lagerstabilen Bindemittelgemischen führt.

Ausserdem können herkömmliche alkylierte, beispielsweise butylierte, Melamin-Formaldehyd-Harze verwendet werden, vorausgesetzt, dass sie den Erfordernissen der Wasserlöslichkeit, der Verträglichkeit oder der Dispergierbarkeit in dem komplett formulierten Beschichtungssystem genügen.

Die erfindungsgemäss erhaltene wässrige Copolymerisat-Dispersion wird in der Art mit dem Aminoplastharz abgemischt, dass (bezogen auf Gesamtharzfeststoff) 5–40 Gew.-% Aminoplastharz, bevorzugt 10–30 Gew.-%, im Bindemittelgemisch enthalten sind.

Die erfindungsgemässe Copolymerisat-Dispersion kann mit einem Aminoplastharz zu Klarlacken oder zu pigmentierten Lacken formuliert werden. Man geht bei der Lackformulierung häufig so vor, dass man Pigmente und/oder Füllstoffe mit üblichen Lackhilfsmitteln, gegebenenfalls Härtungskatalysatoren und gegebenenfalls Neutralisationsmitteln, zu einer Pigmentpaste anreibt, die dann mit dem Bindemittelsystem vermischt wird. Vielfach kann das Aminoplastharz als Anreibharz (Pigmentbenetzungsmittel) bei der Herstellung der Pigmentpaste dienen.

Als Pigmente oder Füllstoffe können alle in der Lackindustrie üblichen Produkte eingesetzt werden, vorausgesetzt, sie sind unter alkalischen Bedingungen ausreichend stabil, damit das gebrauchsfertige Überzugsmittel mehrere Monate lagerfähig ist. Das Pigment kann in bei der Herstellung von pigmentierten, wässrigen Dispersionsfarben üblichen Weise dem Ansatz zugesetzt werden. Bei Lackformulierungen mit wässrigen Copolymerisat-Dispersionen wird der Glanz häufig verbessert, wenn das Pigment in das Aminoplastharz eingemahlen wird und dann die wässrige Pigmentpaste in die wässrige Copolymerisat-Dispersion eingemischt wird. Ein typisches Pigment zur Herstellung von Weisslacken ist beispielsweise Titandioxid.

Für die Herstellung von pigmentierten Lacken ist es in der Regel nötig, Dispergiermittel zu verwenden, üblicherweise Ammonium-oder Alkalisalze von polymeren Carbonsäuren. Art und Menge richten sich nach Art und Menge der Pigmente und der Bindemittel. Ausserdem ist zu beachten, dass solche Dispergiermittel die Eigenschaften der Lackfilme, vor allem die Wasserfestigkeit, beeinflussen können.

Das fertige formulierte Überzugsmittel kann zur Erhöhung der Lagerstabilität zusätzlich noch mit einem tertiären Amin versetzt werden. Der bevorzugte pH-Bereich liegt bei pH 7–9.

Zur Senkung der Einbrenntemperatur kann den Überzugsmitteln auch noch ein Härtungskatalysator zugemischt werden. Ein häufig verwendeter Katalysator ist Paratoluolsulfonsäure.

Die Überzugsmittel auf der Basis der erfindungsgemässen Copolymerisat-Dispersion können auf eine Vielzahl von Untergründen aufgebracht werden, die allerdings gegen die Einbrenntemperatur stabil sein müssen. Besonders geeignet sind metallische Untergründe, z.B. Gegenstände aus Eisen, Stahl, Aluminium, Kupfer, Bronze oder Messing. Dispersionslacke können beispielsweise unter Verwendung von Spritzpistolen, durch Streichen, Rakeln, Walzen oder Eintauchen auf die Untergründe aufgetragen werden. In der Praxis wird der überzogene Gegenstand vorwiegend an der Luft bei Raumtemperatur oder bei nur geringfügig erhöhter Temperatur abgelüftet und getrocknet. Dann wird der Lackfilm durch «Einbrennen» bei einer Temperatur von 80°–180 °C ausgehärtet. Die Lackfilme werden in der Regel über einen Zeitraum von 10–30 Minuten eingebrannt. Die Schichtdicken der eingebrannten Überzüge liegen im Bereich von 15 bis 80 µm, vorzugsweise 25 bis 60 µm.

Eingebrannte Klarlackfilme und pigmentierte Lackfilme auf der Basis der erfindungsgemässen Copolymerisat-Dispersion zeichnen sich durch hervorragendes Verlaufen aus, wobei die bei Gegenwart anderer Verlaufshilfsmittel häufig auftretenden Oberflächenstörungen, beispielsweise Kraterbildung, Orangenschaleneffekt, Silikoneffekt, Schrumpf- und Spannungsrisse und Pigmentstau, nicht vorhanden sind. Ausserdem zeigen diese Lackfilme gute Deckkraft, Glätte, Elastizität, Glanz, Haftung, Wetterbeständigkeit und Vergilbungsresistenz.

Die folgenden Beispiele dienen zur näheren Erläuterung der Erfindung. Prozentangaben und Verhältnisangaben beziehen sich jeweils auf das Gewicht, die Mengenangaben bei Lösungen und Dispersionen jeweils auf den Festkörper.

Die Polymerisationsversuche wurden in einem Mehrhalskolben mit Rührer, Thermometer, Tropftrichter und Temperierbad durchgeführt.

Wird als Regler ein Mercaptan verwendet, so ist darauf zu achten, dass das Mercaptan dem Monomerengemisch oder der Monomerenvoremulsion erst kurz vor dem Beginn des Zudosierens zugesetzt wird, weil bei längerem Stehen des mercaptanhaltigen Monomerengemischs oder der Voremulsion eine Gelb- oder Braunfärbung auftritt.

Beispiel 1

Aus

| 1360 g | Methylmethacrylat |
|---|---|
| 1360 g | Ethylacrylat |
| 280 g | Hydroxyethylmethacrylat |
| 100 g | Methacrylsäure |
| 80 g | N-Methylolacrylamid |
| 40 g | Methacrylamid |
| 50 g | Natriumlaurylethoxylatsulfat |
| 14 g | Fluortensid (Perfluoralkanphosphonsäure/Perfluoralkanphosphinsäure, 60:40; Alkankette $C_6$–$C_{10}$) |
| 70 g | Laurylmercaptan und |
| 3200 g | Wasser |

wurde eine Monomeremulsion hergestellt. Die Emulsion wurde zu einer Lösung von 35 g Natriumlaurylethoxylatsulfat in 2000 g Wasser während 2 Stunden bei 80 °C zudosiert. Parallel zur Monomeremulsion wurde eine Lösung von 8 g Ammoniumperoxydisulfat in 200 g Wasser zum Ansatz zugegeben. Nach Beendigung der Dosierung wurde das Gemisch bei 80 °C 3 Stunden lang gerührt. Nach Abkühlen auf Raumtemperatur wurde die Copolymerisat-Dispersion dann mit einer wässrigen Dimethylaminoethanollösung auf pH 8,5 eingestellt. Die Copolymerisat-Dispersion hatte einen Feststoffgehalt von 37%.

Anwendungsbeispiel 1

Herstellung einer Weisslackfarbe auf der Basis der Copolymerisat-Dispersion nach Beispiel 1:

A. Pigmentpaste

| 20,0 g | Hexamethoxymethylmelamin (50% in Wasser) |
|---|---|
| 1,5 g | Natriumpolyacrylat (25% in Wasser) |
| 0,8 g | Kondensationsprodukt von 1 Mol Nonylphenol mit 6–10 Mol Ethylenoxid |
| 0,3 g | handelsüblicher Entschäumer |
| 5,0 g | Natriumnitrit (5% in Wasser) |
| 5,0 g | Wasser (deionisiert) |
| 80,0 g | Titandioxid (Rutiltyp) |

B. Bindemittel

| 257,0 g | Copolymerisatdispersion nach Beispiel 1. |
|---|---|

Teil A wurde während 10 Stunden in einer Kugelmühle dispergiert, dann wurde Teil B zugemischt und der Ansatz weitere 12 Stunden in der Kugelmühle abgerieben.

Der Weisslack hatte ein Polymerisat/Melaminharz-Verhältnis von 90:10 und ein Bindemittel/Pigment-Verhältnis von 1:0,8. Der Lack wurde nach DIN 53 211 mit einem Wasser/Butylglykol-Gemisch (7:3) auf eine Auslaufzeit von 20 Sekunden eingestellt und auf Bonder 125 gespritzt. Nach einer Ablüftzeit von 15 min wurde der Lackfilm für 30 min bei +150 °C eingebrannt.

Die Weisslackfilme hatten eine Schichtstärke von 45 µm, zeigten einen hervorragenden Verlauf und waren kocherfrei. Die Glanzwerte der einge-

brannten Filme nach DIN 67 530 lagen bei 90% und die Erichsen-Tiefung nach DIN 53 154 ergab Werte von 8,5–9 mm.

Beispiel 2
Aus

| | |
|---|---|
| 340 g | Methylmethacrylat |
| 340 g | Ethylacrylat |
| 75 g | Hydroxyethylmethacrylat |
| 25 g | N-Methylolacrylamid |
| 20 g | Methacrylsäure |
| 10 g | Methacrylamid |
| 10 g | Natriumlaurylsulfat |
| 3 g | Fluortensid (Tetramethylammonium-Perfluoroctansulfonat) |
| 10 g | n-Dodecylmercaptan und |
| 850 g | Wasser |

wurde eine stabile Monomeremulsion hergestellt, die zu einer Lösung aus 600 g Wasser und 10 g Natriumlaurylsulfat innerhalb 2 Stunden bei 80 °C zugegeben wurde. Als Initiator wurde parallel zur Monomeremulsion eine Lösung aus 3 g Ammoniumperoxydisulfat und 50 g Wasser eingeführt. Nach der Einstellung mit einer wässrigen Dimethylaminoethanollösung auf pH 8,2 erhielt man eine Dispersion mit einem Feststoffgehalt von 35%. Der mittlere Teilchendurchmesser des dispergierten Copolymerisats betrug 0,10 µm, die minimale Filmbildetemperatur (MFT) der Dispersion lag bei +15 °C. Weisslacke, die nach Anwendungsbeispiel 1 hergestellt wurden, ergaben im Spritzauftrag auf Aluminium-Bonder kocherfreie, sehr gut verlaufende Filme mit einer Schichtstärke von 65 µm.

Beispiel 3
Aus

| | |
|---|---|
| 340 g | Methylmethacrylat |
| 240 g | Ethylacrylat |
| 100 g | Butylacrylat |
| 70 g | Hydroxyethylmethacrylat |
| 60 g | Methacrylsäure |
| 10 g | Methacrylamid |
| 9 g | N-Methylolacrylamid |
| 12 g | Natriumlaurylsulfat |
| 3 g | Fluortensid (Perfluoralkanphosphonsäure/Perfluoralkanphosphinsäure, 50:50; Alkankette $C_6$–$C_{10}$) |
| 15 g | Laurylmercaptan und |
| 900 g | Wasser |

wurde eine Monomeremulsion hergestellt und innerhalb von 2 Stunden bei 80 °C zu einer Lösung von 10 g Natriumlaurylsulfat in 600 g Wasser zudosiert. Als Initiator wurde parallel zur Monomeremuslion eine Lösung aus 2 g Ammoniumperoxydsulfat in 30 g Wasser zudosiert. Nach der Einstellung des pH-Wertes auf 8,2 erhielt man eine Dispersion mit einem Feststoffgehalt von 35% und einer minimalen Filmbildetemperatur (MFT) von 0 °C.

Anwendungsbeispiel 2
　Herstellung einer Weisslackfarbe auf der Basis der Copolymerisatdispersion nach Beispiel 3:

A. Pigmentpaste

| | |
|---|---|
| 20 g | Hexamethoxymethylmelamin (50% in Wasser) |
| 80 g | Titandioxid (Rutiltyp) |
| 1,5 g | Natriumpolyacrylat (25% in Wasser) |
| 0,8 g | Kondensationsprodukt von 1 Mol Nonylphenol mit 6–10 Mol Ethylenoxid |
| 0,3 g | handelsüblicher Entschäumer |
| 5,0 g | Natriumnitrit (5% in Wasser) |
| 15 g | Wasser (deionisiert) |

B. Bindemittel

| | |
|---|---|
| 257 g | Copolymerisat-Dispersion |
| 20 g | Wasser (deionisiert) |

Teil A wurde 12 Stunden in einer Kugelmühle dispergiert, dann wurde Teil B zugemischt und der Ansatz weitere 10 Stunden abgerieben. Der Weisslack wurde mit einem Wasser/Butylglykol-Gemisch (7:3) auf eine Auslaufzeit (nach DIN 53 211) von 20 Sekunden eingestellt. Der spritzfertige Lack hatte einen Feststoffgehalt von 42%. Wurde der Weisslack auf entfettete Stahlbleche aufgespritzt, so mass man an den eingebrannten kocherfreien Filmen eine Schichtstärke von 45 µm, eine Pendelhärte (nach DIN 53 157) von 162 Sekunden, einen Glanz (nach DIN 67 530) von 86% und eine Erichsen-Tiefung (nach DIN 63 156) von 8,6 mm.

Beispiel 4
Aus

| | |
|---|---|
| 340 g | Methylmethacrylat |
| 340 g | Ethylacrylat |
| 70 g | Hydroxyethylmethacrylat |
| 60 g | Methacrylsäure |
| 10 g | Methacrylamid |
| 8 g | N-Methylolacrylamid |
| 14 g | Natriumlaurylsulfat |
| 3,5 g | Fluortensid (Perfluoroctanphosphonsäure/Perfluoroctanphosphinsäure 60:40) |
| 20 g | Laurylmercaptan und |
| 900 g | Wasser |

wurde eine Monomeremulsion hergestellt und innerhalb von 2 Stunden bei 80 °C zu einer Lösung von 10 g Natriumlaurylsulfat in 580 g Wasser zudosiert. Als Initiator wurde parallel zur Monomeremulsion eine Lösung von 2 g Ammoniumperoxydisulfat in 40 g Wasser zugetropft. Nach der Einstellung des pH-Wertes mit Dimethylaminoethanollösung auf pH 8,0 erhielt man eine Dispersion mit einem Feststoffgehalt von 35% und einer minimalen Filmbildetemperatur (MFT) von +12 °C. Das Copolymerisat hatte eine Glastemperatur von $T_G = 46$ °C.

Anwendungsbeispiel 3
　Herstellung einer Weisslackfarbe auf der Basis der Copolymerisat-Dispersion nach Beispiel 4:

A. Pigmentpaste

| | |
|---|---|
| 4,82 g | Hexamethoxymethylmelamin (50% in Wasser) |
| 19,29 g | Titandioxid (Rutiltyp) |

4,82 g Wasser (deionisiert)
1,20 g Natriumnitrit (5% in Wasser)
0,36 g Natriumpolyacrylat (25% in Wasser)
0,19 g Kondensationsprodukt von 1 Mol Nonylphenol mit 6–10 Mol Ethylenoxid
0,07 g handelsüblicher Entschäumer

B. Bindemittel
62,0 g Copolymerisat-Dispersion
7,25 g Wasser (deionisiert)

Nach dem Verfahren von Anwendungsbeispiel 2 wurde eine Weisslackfarbe hergestellt, die eine Auslaufzeit (nach DIN 53 211) von 30 Sekunden aufwies und mit Wasser/Butylglykol (7:3) auf 20 Sekunden eingestellt wurde. Die Weisslackfarbe hatte ein Bindemittelverhältnis Copolymerisat/Melaminharz von 9:1 und ein Bindemittel/Pigmentverhältnis von 1:0,8 und enthielt weniger als 2% Lösemittel. Sie war gut verspritzbar und verlief ausgezeichnet. Der Glanz eines eingebrannten Filmes (40 µm Schichtstärke) auf entfetteten Stahlblechen appliziert lag (nach DIN 67 530) bei 88% und die Erichsen-Tiefung (nach DIN 53 156) bei 9,2 mm.

Beispiel 5
Entsprechend Beispiel 4 wurde eine Copolymerisat-Dispersion hergestellt aus
340 g Methylmethacrylat
340 g Ethylacrylat
75 g Hydroxyethylmethacrylat
50 g Methacrylsäure
15 g Methacrylamid
22 g Ammonium-Perfluoroctylsulfat und
1500 g Wasser.

Nach der Einstellung eines pH-Wertes von 8,2 mit einer Dimethylaminoethanollösung (25%) erhielt man eine Dispersion mit einem Feststoffgehalt von 35%.

Anwendungsbeispiel 4
Nach der Vorschrift vom Anwendungsbeispiel 3 wurde mit der Copolymerisat-Dispersion gemäss Beispiel 5 eine Weisslackfarbe hergestellt. Nach der Spritzapplikation auf entfettete Stahlbleche und einem Einbrennen von 30 min bei 150 °C erhielt man kocherfreie Lackfilme mit einer Schichtstärke von 45 µm und einem Glanzwert (nach DIN 67 530) von 86%.

Vergleichsbeispiel
Gemäss Beispiel 4 wurde eine Copolymerisat-Dispersion hergestellt, die aber kein Fluortensid enthielt. Die Kenndaten dieser Polymerisat-Dispersion entsprachen denen gemäss Beispiel 4. Allerdings zeigte der Weisslack, der nach Anwendungsbeispiel 3 auf der Basis dieser Copolymerisat-Dispersion hergestellt wurde, ein anderes rheologisches Verhalten. Die auf entfettete Stahlbleche aufgespritzten Weisslackfilme erreichten nur eine maximale Schichtstärke (kocherfrei) von 20–25 µm und zeigten zusätzlich deutliche Verlaufstörungen, z.B. Nadelstiche, Krater und Kocher am Rand der Lackfilme.

## Patentansprüche für die Vertragsstaaten BE, CH, DE, FR, GB, IT, LI, LU, NL, SE

1. Wässrige Kunststoff-Dispersion auf Basis eines Copolymerisats aus einem Acrylmonomer, einem Vinylmonomer und einem funktionellen, zur Vernetzung fähigen Monomer, enthaltend mindestens einen aus einem Fluortensid bestehenden Emulgator, die erhalten wird durch radikalisch initiierte Emulsionscopolymerisation eines Monomerengemisches, enthaltend

I) 20 bis 80 Gew.-% einer «hartmachenden» Komponente A aus der Gruppe Methacrylsäureester, dessen Homopolymerisat eine Glasübergangstemperatur $T_G$ oberhalb + 50 °C besitzt, Styrol, Vinyltoluol oder Vinylxylol, oder Kombinationen dieser Komponenten, wobei das aromatische Vinylmonomer nicht mehr als 50 Gew.-% der Gesamtmenge aller Monomeren ausmacht,

II) 20 bis 80 Gew.-% einer «weichmachenden» Komponente B aus der Gruppe Acrylsäureester oder Methacrylsäureester, dessen Homopolymerisat eine Glasübergangstemperatur $T_G$ unterhalb + 50 °C besitzt, oder Kombinationen dieser Komponenten,

III) jeweils bezogen auf die Summe aus A + B = 100,

1) 3 bis 18 Gew.-% eines monoolefinisch ungesättigten Monomeren mit einer Hydroxylgruppe und

2) 0,5 bis 10 Gew.-% einer $\alpha,\beta$-ungesättigten Monocarbonsäure und/oder einer ungesättigten Dicarbonsäure, dadurch gekennzeichnet, dass die Copolymerisation in Gegenwart eines anionaktiven, einen Perfluoralkylrest mit 2 bis 20 C-Atomen oder einen Perfluoraralkylrest mit 7 bis 30 C-Atomen aufweisenden Fluortensids als Emulgator oder als Bestandteil des Emulgatorgemisches durchgeführt wurde und die Partikeldurchmesser des erhaltenen Dispersionscopolymerisats im Bereich von 0,05 bis 0,2 µm liegen.

2. Kunststoff-Dispersion nach Anspruch 1, dadurch gekennzeichnet, dass sie als Fluortensid eine Verbindung aus der Gruppe der Perfluoralkylsulfonsäuren, Perfluoraralkylsulfonsäuren, langkettigen Perfluorcarbonsäuren, Perfluoralkanphosphonsäuren, Perfluoralkanphosphinsäuren, der Salze dieser Säuren, der Perfluoralkylsulfate, Perfluoraralkylsulfate und Perfluoralkylphosphate enthält.

3. Kunststoff-Dispersion nach Anspruch 1, dadurch gekennzeichnet, dass sie als Fluortensid ein Gemisch aus mindestens einer Perfluoralkanphosphonsäure und mindestens einer Perfluoralkanphosphinsäure, deren Kohlenstoffkette jeweils 6 bis 16 C-Atome umfasst, enthält.

4. Verfahren zur Herstellung einer wässrigen Kunststoff-Dispersion nach Anspruch 1 durch Copolymerisieren eines Monomerengemisches, enthaltend

A) 20 bis 80 Gew.-% eines Methacrylsäureesters, dessen Homopolymerisat eine Glasübergangstemperatur $T_G$ oberhalb + 50 °C hat, oder Styrol, Vinyltoluol oder Vinylxylol, oder eines Gemisches dieser Monomeren, wobei das aromatische Monomer nicht mehr als 50 Gew.-% der Gesamtmenge aller Monomeren ausmacht, als «hartmachende» Komponente,

B) 20–80 Gew.-% eines Acrylsäure- oder Methacrylsäureesters, dessen Homopolymerisat eine Glasübergangstemperatur $T_G$ unterhalb + 50 °C hat, oder eines Gemisches dieser Monomeren als «weichmachende» Komponente und

C) jeweils bezogen auf die Summe aus A + B =100,

1) 3 bis 18 Gew.-% eines monoolefinisch ungesättigten Monomeren mit einer Hydroxylgruppe und

2) 0,5 bis 10 Gew.-% einer $\alpha,\beta$-ungesättigten Monocarbonsäure und/oder einer ungesättigten Dicarbonsäure in wässrigem Medium in Gegenwart eines radikalbildenden Initiators und eines Emulgators oder eines Gemisches mehrerer Emulgatoren, dadurch gekennzeichnet, dass die Copolymerisation in Gegenwart eines anionaktiven, einen Perfluoralkylrest mit 2 bis 20 C-Atomen oder einen Perfluoraralkylrest mit 7 bis 30 C-Atomen aufweisenden Fluortensids als Emulgator oder als Bestandteil des Emulgatorgemisches durchgeführt wird und die Partikeldurchmesser des resultierenden Dispersionscopolymerisats im Bereich von 0,05 bis 0,2 μm liegen.

5. Verfahren nach Anspruch 4, dadurch gekennzeichnet, dass die Copolymerisation in Gegenwart einer Verbindung aus der Gruppe der Perfluoralkylsulfonsäuren, Perfluoraralkylsulfonsäuren, langkettigen Perfluorcarbonsäuren, Perfluoralkanphosphonsäuren, Perfluoralkansphosphinsäuren, der Salze dieser Säuren, der Perfluoralkylsulfate, Perfluoraralkylsulfate und Perfluoralkylphosphate durchgeführt wird.

6. Verfahren nach Anspruch 4, dadurch gekennzeichnet, dass die Copolymerisation in Gegenwart eines Gemisches von mindestens einer Perfluoralkanphosphonsäure und mindestens einer Perfluoralkanphosphinsäure, deren Kohlenstoffkette jeweils 6 bis 16 C-Atomen umfasst, durchgeführt wird.

7. Verwendung einer Copolymerisat-Dispersion nach Anspruch 1 für die Herstellung von durch Wärme vernetzbaren Überzugsmitteln.

### Patentansprüche für den Vertragsstaat AT

1. Verfahren zur Herstellung einer wässrigen Kunststoff-Dispersion durch Copolymerisieren von

A) 20 bis 80 Gew.-% eines Methacrylsäureesters, dessen Homopolymerisat eine Glastemperatur $T_G$ oberhalb + 50 °C hat, oder Styrol, Vinyltoluol oder Vinylxylol, oder eines Gemisches dieser Monomeren, wobei das aromatische Monomer nicht mehr als 50 Gew.-% der Gesamtmenge aller Monomere ausmacht, als hartmachende Komponente,

B) 20–80 Gew.-% eines Acrylsäure- oder Methacrylsäureesters, dessen Homopolymerisat eine Glastemperatur $T_G$ unterhalb + 50 °C hat, oder eines Gemisches dieser Monomeren als weichmachende Komponente und

C) jeweils bezogen auf die Summe aus A + B =100,

1) 3 bis 18 Gew.-% eines monoolefinisch ungesättigten Monomeren mit einer Hydroxylgruppe und

2) 0,5 bis 10 Gew.-% einer $\alpha,\beta$-ungesättigten Monocarbonsäure und/oder einer ungesättigten Dicarbonsäure in wässrigem Medium in Gegenwart eines radikalbildenden Initiators und eines Emulgators oder eines Gemisches mehrerer Emulgatoren, dadurch gekennzeichnet, dass die Copolymerisation in Gegenwart eines anionenaktiven, einen Perfluoralkylrest mit 2 bis 20 C-Atomen oder einen Perfluoralkylrest mit 7 bis 30 C-Atomen aufweisenden Fluortensids als Emulgator oder als Bestandteil des Emulgatorgemisches durchgeführt wird und die Partikeldurchmesser des resultierenden Dispersionscopolymerisats im Bereich von 0,05 bis 0,2 μm liegen.

2. Verfahren nach Anspruch 1, dadurch gekennzeichnet, dass die Copolymerisation in Gegenwart einer Verbindung aus der Gruppe der Perfluoralkylsulfonsäuren, Perfluoraralkylsulfonsäuren, langkettigen Perfluorcarbonsäuren, Perfluoralkanphosphonsäuren, Perfluoralkansphosphinsäuren, der Salze dieser Säuren, der Perfluoralkylsulfate, Perfluoraralkylsulfate und Perfluoralkylphosphate durchgeführt wird.

3. Verfahren nach Anspruch 1, dadurch gekennzeichnet, dass die Copolymerisation in Gegenwart eines Gemisches von mindestens einer Perfluoralkanphosphonsäure und mindestens einer Perfluoralkanphosphinsäure, deren Kohlenstoffkette jeweils 6 bis 16 C-Atomen umfasst, durchgeführt wird.

4. Verwendung einer nach dem Verfahren gemäss Anspruch 1 hergestellten Kunststoff-Dispersion für die Herstellung von durch Wärme vernetzbaren Überzugsmitteln.

### Revendications pour les Etats contractants: BE, CH, DE, FR, GB, IT, LI, LU, NL, SE

1. Dispersion aqueuse de matière plastique à base d'un copolymère dérivant d'un monomère acrylique, d'un monomère vinylique et d'un monomère fonctionnel apte à la réticulation, dispersion qui contient au moins un émulsionnant consistant en un surfactif fluoré et qui a été obtenue par copolymérisation en émulsion, amorcée par des radicaux, d'un mélange de monomères renfermant:

I) de 20 à 80% den poids d'une composante A «donnant de la dureté» prise dans l'ensemble constitué par les esters méthacryliques dont les homopolymères ont une température de transition vitreuse $T_G$ supérieure à + 50 °C, le styrène, le vinyltoluène et le vinylxylène, ou des associations de ces composantes, la proportion du monomère vinylique aromatique ne devant pas représenter plus de 50% en poids par rapport à l'ensemble des monomères,

II) de 20 à 80% en poids d'une composante «plastifiante» B prise dans l'ensemble constitué par les esters acryliques et les esters méthacryliques dont les homopolymères ont une température de transition vitreuse $T_G$ inférieure à + 50 °C, ou des associations de ces composantes,

III) à chaque fois par rapport à la somme A + B =100

1) de 3 à 18% en poids d'un monomère mono-éthylénique porteur d'un radical hydroxy et

2) de 0,5 à 10% en poids d'un acide mono-carboxylique insaturé en $\alpha$, $\beta$ et/ou d'un acide di-carboxylique insaturé, dispersion caractérisée en ce que ladite copolymérisation a été effectuée en présence d'un surfactif fluoré anionique contenant un radical perfluoroalkyle en $C_2$–$C_{20}$ ou un radical perfluoro-aralkyle en $C_7$–$C_{30}$, en tant qu'é-mulsionnant ou en tant que constituant du mélange d'émulsionnants, et en ce que le diamètre des particules du copolymère en dispersion ainsi obtenu est situé dans l'intervalle allant de 0,05 à 0,2 µm.

2. Dispersion de matière plastique selon la revendication 1, caractérisée en ce qu'elle contient, comme surfactif fluoré, un composé pris dans l'ensemble constitué par les acides perfluoro-alkyl-sulfoniques, les acides perfluoro-aralkyl-sulfoniques, les acides carboxyliques à longues chaînes perfluorés, les acides perfluoroalcane-phosphoniques, le acides perfluoro-alcane-phosphiniques, les sels de ces acides, les sulfats de perfluoroalkyles, les sulfates de perfluoro-aralkyles et les phosphates de perfluoro-alkyles.

3. Dispersion de matière plastique selon la revendication 1, caractérisée en ce qu'elle contient, comme surfactif fluoré, un mélange d'au moins un acide perfluoro-alcane-phosphonique et d'au moins un acide perfluoro-alcane-phosphinique dont la chaîne carbonée pour chacun de ces acides, contient de 6 à 16 atomes de carbone.

4. Procédé de préparation d'une dispersion aqueuse de matière plastique selon la revendication 1, par copolymérisation d'un mélange de monomères qui contient:

A) de 20 à 80% en poids d'un ester méthacrylique dont l'homopolymère a une température de transition vitreuse $T_G$ supérieure à + 50 °C, de styrène, de vinyltoluène ou de vinylxylène, ou d'un mélange de ces monomères, le monomère aromatique ne devant pas représenter plus de 50% en poids de l'ensemble de tous les monomères, en tant que composante donnant de la dureté,

B) de 20 à 80% en poids d'un ester acrylique ou d'un ester méthacrylique dont l'homopolymère a une température de transition vitreuse $T_G$ inférieure à + 50 °C, ou d'un mélange de ces monomères, en tant que composante plastifiante, et

C) à chaque fois par rapport à la somme de A et B posée égale à 100,

1) de 3 à 18% en poids d'un monomère mono-éthylénique contenant un radical hydroxy et

2) de 0,5 à 10% en poids d'un acide mono-carboxylique insaturé en $\alpha,\beta$ et/ou d'un acide di-carboxylique insaturé, en milieu aqueux, en présence d'un amorceur radicalaire et en présence d'un émulsionnant ou d'un mélange d'émulsion-nants, procédé caractérisé en ce qu'on effectue la copolymérisation en présence d'un surfactif fluoré anionique contenant un radical perfluoro-alk-yle en $C_2$–$C_{20}$ ou un radical perfluoroaralkyle en $C_7$–$C_{30}$, en tant qu'émulsionnants, et en ce que le diamètre des particules du copolymère en dispersion ainsi obtenu est compris entre 0,05 et 0,2 µm.

5. Procédé selon la revendication 4 caractérisé en ce qu'on effectue la copolymérisation en présence d'un composé pris dans l'ensemble constitué par les acides perfluoroalkyl-sulfoniques, les acides perfluoroaralkyl-sulfoniques, les acides carboxyliques à longues chaînes perfluorés, les acides perfluoro-alcane-phosphoniques, les acides perfluoro-alcane-phosphiniques, les sels de ces acides, les sulfates de perfluoro-alkyles, les sulfates de perfluoro-aralkyles et les phosphates de perfluoroalkyles.

6. Procédé selon la revendication 4 caractérisé en ce qu'on effectue la copolymérisation en présence d'un mélange d'au moins un acide perfluoro-alcanephosphonique et d'au moins un acide perfluoro-alcane-phosphinique dont la chaîne carbonée, pour chacun de ces acides, contient de 6 à 16 atomes de carbone.

7. Application d'une dispersion de copolymère selon la revendication 1 pour la préparation de produits de revêtement réticulables par la chaleur.

**Revendications pour l'Etat contractant:AT**

1. Procédé de préparation d'une dispersion aqueuse de matière plastique par copolymérisation:

A) de 20 à 80% en poids d'un ester méthacrylique dont l'homopolymère a une température de transition vitreuse $T_G$ supérieure à + 50 °C, de styrène, de vinyltoluène ou de vinylxylène, ou d'un mélange de ces monomères, le monomère aromatique ne devant pas représenter plus de 50% en poids de l'ensemble de tous les monomères, en tant que composante donnant de la dureté,

B) de 20 à 80% en poids d'un ester acrylique ou méthacrylique dont l'homopolymère a une température de transition vitreuse $T_G$ inférieure à + 50 °C, ou d'un mélange de ces monomères, en tant que composante plastifiante, et

C) à chaque fois par rapport à la somme de A et B posée égale à 100,

1) de 3 à 18% en poids d'un monomère mono-éthylénique contenant un radical hydroxy et

2) de 0,5 à 10% en poids d'un acide monocarb-oxylique insaturé en $\alpha$, $\beta$ et/ou d'un acide dicarb-oxylique insaturé, en milieu aqueux, en présence d'un amorceur radicalaire et en présence d'un émulsionnant ou d'un mélange d'émulsionnants, procédé caractérisé en ce qu'on effectue la copolymérisation en présence d'un surfactif fluoré anionique contenant un radical perfluoro-alkyle en $C_2$–$C_{20}$ ou un radical perfluoroaralkyle en $C_7$–$C_{30}$, en tant qu'émulsionnant ou constituant du mélange d'émulsionnants, et en ce que le diamètre des particules du copolymère en dispersion ainsi obtenu est compris entre 0,05 et 0,2 µm.

2. Procédé selon la revendication 1 caractérisé en ce qu'on effectue la copolymérisation en présence d'un composé pris dans l'ensemble constitué par les acides perfluoro-alkyl-sulfoniques, les acides perfluoro-aralkyl-sulfoniques, les acides carboxyliques à longues chaînes perfluorés, les acides perfluoro-alcane-phosphoniques, les acides perfluoro-alcane-phosphiniques, les sels de ces acides, les sulfates de perfluoro-alkyles, les sulfates de perfluoro-aralkyles er les phosphates de perfluoro-alkyles.

3. Procédé selon la revendication 1 caractérisé en ce qu'on effectue la copolymérisation en présence d'un mélange d'au moins un acide perfluoro-alcane-phosphnique et d'au moins un acide perfluoro-alcane-phosphinique dont la chaîne carbonée, pour chacun de ces acides, contient de 6 à 16 atomes de carbone.

4. Application d'une dispersion de matière plastique qui a été préparée par le procédé de la revendication 1 pour la préparation de produits de revêtements réticulables par la chaleur.

### Claims for the Contracting states: BE, CH, DE, FR, GB, IT, LI, LU, NL, SE

1. An aqueous plastics dispersion based on a copolymer of an acrylic monomer, a vinyl monomer and a functional monomer capable of crosslinking, containing at least one emulsifier consisting of a fluorinated surfactant, which dispersion is obtained by a radically initated emulsion copolymerization of a monomer mixture containing

I) 20 to 80% by weight of a «hardening» component A from the group comprising methacrylic acid ester, the homopolymer of which has a glass transition temperature $T_G$ above $+50\,°C$, styrene, vinyltoluene or vinylxylene, or mixtures of these components, the aromatic vinyl monomer contributing not more than 50% by weight to the total amount of all monomers,

II) 20 to 80% by weight of a «plasticizing» component B from the group comprising acrylic acid ester or methacrylic acid ester, the homopolymer of which has a glass transition temperature $T_G$ below $+50\,°C$, or mixtures of these components,

III) in each case relative to the total of A + B = 100,

1) 3 to 18% by weight of a monoolefinic unsaturated monomer having a hydroxyl group and

2) 0,5 to 10% by weight of an α-, β- unsaturated monocarboxylic acid and/or an unsaturated dicarboxylic acid, characterized in that the copolymerization was carried out in the pressence of an anionic fluorinated surfactant having a perfluoroalkyl radical of 2 to 20 C atoms or a perfluoroaralkyl radical of 7 to 30 C atoms as the emulsifier or as a component of the mixture of emulsifiers, and the particle diameters of the resulting dispersion copolymer are in the range of from 0,05 to 0,2 μm.

2. The plastics dispersion as claimed in claim 1, characterized in that the fluorinated surfactant is a compound from the group comprising the perfluoroalkylsulfonic acids, perfluoroaralkylsulfonic acids, long-chain perfluorocarboxylic acids, perfluoroalkanephosphonic acids, perfluoroalkanephosphinic acids, the salts of these acids, the perfluoroalkyl sulfates, perfluoroalkyl sulfates and perfluoroalkyl phosphates.

3. The plastics dispersion as claimed in claim 1, characterized in that the fluorinated surfactent is a mixture of at least one perfluoroalkanephosphonic acid and at least one perfluoroalkanephosphinic acid, the carbon chain of which comprises 6 to 16 C atoms in each case.

4. A process for the preparation of an aqueous plastics dispersion as claimed in claim 1 by copolymerization of a monomer mixture containing

a) as the «hardening» component, 20 to 80% by weight of an ester of methacrylic acid, the homopolymer of which has a glass transition temperature $T_G$ above $+50\,°C$, or styrene, vinyltoluene or vinylxylene, or a mixture of these monomers, the aromatic monomer contributing not more than 50% by weight to the total amount of all monomers,

b) as the «plasticizing» component, 20 to 80% by weight of an ester of acrylic acid or of methacrylic acid, the homopolymer of which has a glass transition temperature $T_G$ below $+50\,°C$, or a mixture of these monomer, and

c) in each case relative to the total of A + B = 100,

1) 3 to 18% by weight of a monoolefinic unsaturated monomer having a hydroxyl group and

2) 0,5 to 10% by weight of an α-, β- unsaturated monocarboxylic acid and/or an unsaturated dicarboxylic acid, in an aqueous medium in the presence of a radical-forming initiator and an emulsifier or a mixture of several emulsifiers, characterized in that the copolymerization is carried out in the presence of an anionic fluorinated surfactant having a perfluoroalkyl radical of 2 to 20 C atoms or a perfluoroaralkyl radical of 7 to 30 C atoms as the emulsifier or as a component of the mixture of emulsifiers, and the particle diameters of the resulting dispersion copolymers are in the range of from 0,05 to 0,2 μm.

5. The process as claimed in claim 4, characterized in that the copolymerization is carried out in the presence of a compound from the group comprising the perfluoroalkylsulfonic acids, perfluoroaralkylsulfonic acids, longchain perfluorocarboxylic acids, perfluoroalkanephosphonic acids, perfluoroalkanephosphinic acids, the salts of these acids, the perfluoroalkyl sulfates, perfluoroaralkyl sulfates and perfluoroalkyl phosphates.

6. The process as claimed in claim 4, characterized in that copolymerization is carried out in the presence of a mixture of at least one perfluoroalkanephosphonic acid and at least one perfluoroalkanephosphinic acid, the carbon chains of which comprise 6 to 16 C atomes in each case.

7. The use of a copolymer dispersion as claimed in claim 1 for the manufacture of coating agents which can be crosslinked by the action of heat.

### Claims for the Contracting state: AT

1. A process for the preparation of an aqueous plastics dispersion by copolymerization of

a) 20 to 80% by weight of an ester of methacrylic acid, the homopolymer of which has a glass temperature $T_G$ above $+50\,°C$, or styrene, vinyltoluene or vinylxylene, or a mixture of these monomers, the aromatic monomer contributing not more than 50% by weight to the total amount of all monomers, as the hardening component,

b) 20 to 80% by weight of an ester of acrylic acid or of methacrylic acid, the homopolymer of which has a glass temperature $T_G$ below +50 °C, or a mixture of these monomers, as the plasticizing component,

c) in each case relative to the total of A + B = 100,

1) 3 to 18% by weight of a monoolefinic unsaturated monomer having a hydroxyl group and

2) 0,5 to 10% by weight of an α-, β- unsaturated monocarboxylic acid and/or an unsaturated dicarboxylic acid, in an aqueuos medium in the presence of a radical-forming initiator and an emulsifier or a mixture of several emulsifiers, characterized in that the copolymerization is carried out in the presence of an anionic fluorinated surfactant having a perfluoralkyl radical of 2 to 20 C atoms or a perfluoroaralkyl radical of 7 to 30 C atoms as the emulsifier or as a component of the mixture of emulsifiers, and the particle diameters of the resulting dispersion copolymer are in the range of from 0,05 to 0,2 μm.

2. The process as claimed in claim 1, characterized in that the copolymerization is carried out in the presence of a compound from the group comprising the perfluoroalkylsulfonic acids, perfluoroaralkylsulfonic acids, longchain perfluorocarboxylic acids, perfluoroalkanephosphonic acids, perfluoroalkanephosphinic acids, the salts of these acids, the perfluoroalkyl sulfates, perfluoroaralkyl sulfates and perfluoroalkyl phosphates.

3. The process as claimed in claim 1, characterized in that the copolymerization is carried out in the presence of a mixture of at least one perfluoroalkanephosphonic acid and at least one perfluoroalkanephosphinic acid, the carbon chains of which comprise 6 to 16 C atoms in each case.

4. The use of a copolymer dispersion prepared as claimed in claim 1 for the manufacture of coating agents which can be crosslinked by the action of heat.